# EUROPÄISCHE PATENTSCHRIFT

(11) **EP 0 976 599 B1**
(45) Veröffentlichungstag und Bekanntmachung des Hinweises auf die Patenterteilung: **01.10.2003**
(21) Anmeldenummer: 99113613.6
(22) Anmeldetag: 12.07.1999
(51) Int. Cl.: B60K 15/077

(54) **Flüssigkeitstank, insbesondere Kraftstofftank, mit einem Schwallschutzelement und Verfahren zu seiner Herstellung**
Liquid tank, especially fuel tank, with wave inhibiting element and process for its manufacturing
Réservoir de liquide, en particulier réservoir de carburant, avec un élément brise-lame et procédé pour sa fabrication

(30) Priorität: 29.07.1998 DE 19834164
(43) Veröffentlichungstag der Anmeldung: 02.02.2000
(73) Patentinhaber: Volkswagen Aktiengesellschaft, 38436 Wolfsburg (DE)
(72) Erfinder: Reinhardt, Gerd-Dieter, 38110 Braunschweig (DE)

(56) Entgegenhaltungen:
- DE-A- 19 729 818
- FR-A- 2 629 397
- US-A- 3 650 431
- US-A- 4 764 408

## Beschreibung

Die Erfindung betrifft einen Flüssigkeitstank gemäß dem Oberbegriff des Patentanspruchs 1 sowie ein Verfahren zu seiner Herstellung.

Bekanntlich besteht bei Flüssigkeitstanks, die im Betrieb stärkeren Bewegungen unterworfen sind, also insbesondere bei Kraftstofftanks in Kraftfahrzeugen, die Gefahr, dass die sich relativ zum Tank bewegende Flüssigkeit auf Tankwände aufprallt und dabei kinetische Energie in Geräusch umgesetzt wird. Daher existiert bereits eine Vielzahl von Vorschlägen, Prallelemente aus mit Nadeln versehenen Kunststoffolien oder aus Kunststoffasern im Tank insbesondere so anzuordnen, dass kritische Innenflächen des Tanks vor dem direkten Aufprallen der Flüssigkeit geschützt sind (DE 39 05 611 C2, DE 39 43 710 C2, DE 39 43 711 C2). Bekannt ist auch (DE 35 30 228 C2) ein Transporttank mit Schwallschutzelementen, die ebenso wie für sie vorgesehene Halterungen durch ein Mannloch des Tanks eingebracht und in Position gebracht werden.

Gemeinsam ist dem Stand der Technik die Notwendigkeit der Befestigung der relativ flach ausgebildeten Prall- oder Schwallschutzelemente mittels zusätzlicher Befestigungseinrichtungen. Darüber hinaus zeigt die Erfahrung, dass in der Regel eine nur örtliche Abdeckung von Innenwandbereichen des Tanks nicht ausreichend ist, um eine störende Geräuschentwicklung zu vermeiden.

Aus den Schriften US 4,764,408, die den Oberbegriff des Anspruchs 1 zeigt, und FR 2 629 397 sind bereits elastisch zusammendrückbare Schwallschutzelemente bekannt, die sich nach Einfüllen in den Tank im Volumen vergrößern und sich dann direkt an der Tankinnenwand abstützen. Dabei werden dort für diesen Zweck jedoch eine Vielzahl von einzelnen Schwallschutzelementen in den Tank eingeführt, was das Verfahren relativ aufwendig macht und hinsichtlich der vollständigen Ausfüllung der Tankkontur nachteilig ist.

Der Erfindung liegt die Aufgabe zugrunde, einen gattungsgemäßen Flüssigkeitstank zu schaffen, der bei einfacher Herstellung ohne Notwendigkeit besonderer Befestigungselemente für das Schwallschutzelement eine hohe Wirksamkeit bezüglich der Vermeidung störender Schwallgeräusche bietet.

Weiterhin betrifft die Erfindung ein Verfahren zum Herstellen eines derartigen Flüssigkeitstanks.

Die erfindungsgemäße Lösung besteht bei einem, gattungsgemäßen Flüssigkeitstank aus den kennzeichnenden Merkmalen des Hauptanspruchs; die weiteren Ansprüche betreffen ein Verfahren zum Herstellen eines derartigen Flüssigkeitstanks.

In Abweichung von dem diskutierten Stand der Technik verwendet die Erfindung also nicht ein Schwallschutzelement aus einer mit Nadeln versehenen Kunststoffolie oder einem Kunststoff-Fasermaterial, bzw. eine Vielzahl von elastisch zusammendrückbaren Schwallschutzelementen, sondern ein offenporiges grobes Filterschaumteil, wobei sich die Materialwahl (im Beispiel PE) verständlicherweise auch nach der Beständigkeit gegenüber der Flüssigkeit im Tank, also beispielsweise gegenüber Benzin und Dieselöl bei einem Kraftstofftank, richtet.

Die Ausbildung des Schwallschutzelementes als ein Filterschaumteil hat dabei den besonderen Vorteil, dass es sich in komprimierter Form sehr leicht fixieren läßt, zum Beispiel mittels eines netzartig aufgespannten Fadens. Nach dem Lösen der Fixierung innerhalb des Tanks gewährleistet die Ausbildung des Schwallschutzelementes als ein Filterschaumteil eine vollständige Anpassung des Filterschaumteiles an die Tankinnenwand im Bereich der zu Schwallgeräuschen neigenden Tankbereiche.

In weiterer Abkehr vom Stand der Technik bildet das Schwallschutzelement bei der Erfindung nicht eine flache Abdeckung einzelner Tankwandbereiche, sondern eine Ausfüllung derjenigen Tankinnenbereiche, die Anlaß zur Schwallgeräuschentstehung geben. Zwar muß bei der Erfindung ein gewisser Verlust des für die Flüssigkeitsaufnahme zur Verfügung stehenden Tankvolumens in Kauf genommen werden, jedoch ist diese Einbuße gegenüber dem erzielten Gewinn an Geräuschfreiheit durchaus vertretbar. In jedem Fall wird man einen Filterschaum verwenden, der die Flüssigkeit nicht aufsaugt und zurückhält, sondern zum Verbrauch abgibt.

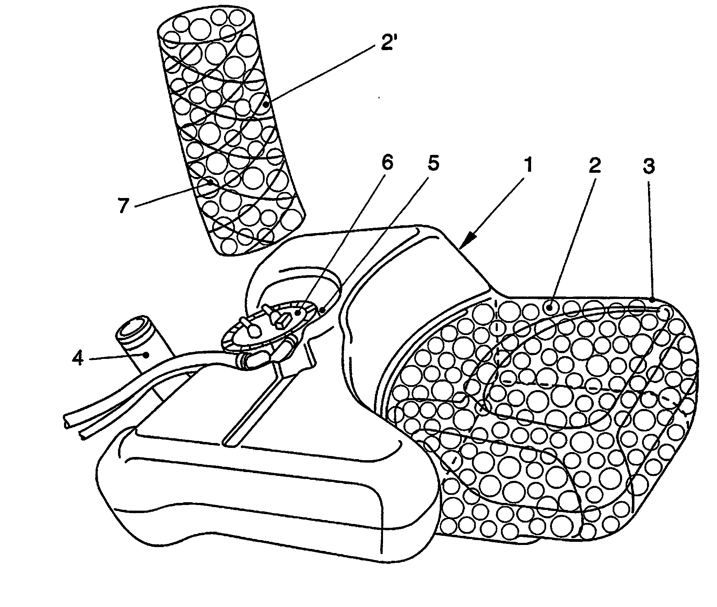

Ein Ausführungsbeispiel der Erfindung wird im folgenden anhand der Zeichnung erläutert, die perspektivisch einen mit einem Schwallschutzelement teilweise ausgefüllten, einteilig in einem Blasverfahren hergestellten Kraftstofftank zeigt.

Der eigentliche Kraftstofftank ist mit 1 bezeichnet. Er ist, wie bereits gesagt, einteilig in einem an sich bekannten Blasverfahren gewonnen. Diese Einteiligkeit beeinträchtigt das Einbringen des das Schallschutzelement bildenden Filterschaumteils 2 nicht, das, wie durch die Darstellung eines möglichst groß- und offenporigen Schaummaterials in der Zeichnung angedeutet, den flacheren, in der Darstellung rechten Tankbereich 3 ausfüllt. Dabei ist der Zuschnitt des Filterschaumteils 2 so getroffen, dass sich dieses elastisch gegen sich gegenüberliegende Wände des Tanks 1 abstützt, so dass eine Halterung durch Reibschluß gewährleistet ist.

Der Tank 1 weist außer dem Einfüllstutzen 4 eine Öffnung 5 für die bei 6 angedeutete Kraftstoffpumpe bekannter Bauart auf, die in diesem Ausführungsbeispiel eine an der oberen Wand des Tanks 1 befestigte, durch die Öffnung 5 in das Tankinnere hineinragende Innenpumpe ist. Zum Einbringen des Schwallschutzelements in den Tank 1 wird die Pumpe 6 entfernt, so dass die Öffnung 5 freiliegt. Zum Einführen wird das Filterschaumteil, wie bei 2' angedeutet, komprimiert und beispielsweise mittels eines netzartig aufgespannten Fadens 7 seine komprimierte Form gewahrt, so dass das Teil 2' durch die Öffnung 5 in den Tankbereich bewegt wird. Dann wird die netzartige Umhüllung (Faden 7) gelöst, der Faden herausgezogen und damit der Körper 2' zur elastischen Rückgewinnung seiner ursprünglichen Form und Ausdehnungen freigegeben. Seine ursprüngliche Form sowie seine ursprünglichen Abmessungen, die der Körper 2 nun wieder eingenommen hat, sind so gewählt, dass das Filterschaumteil 2 das gesamte innere Volumen des Tankbereichs 3 ausfüllt und sich elastisch an sich gegenüberliegenden Innenwänden des Tankbereichs 3 abstützt. Dabei tritt zumindest ein Reibschluß auf; der Tankbereich 3 kann jedoch auch nach innen ragende Vorsprünge oder Stufen aufweisen, die dann eine formschlüssige Halterung des Filterschaumteils 2 in dem Tankbereich 3 sicherstellen.

Mit der Erfindung sind demgemäß ein gattungsgemäßer Flüssigkeitstank und ein Verfahren zu seiner Herstellung offenbart, der beziehungsweise das sich durch große Einfachheit bei maximalen Vorteilen auszeichnet.

## Patentansprüche

1. Flüssigkeitstank, insbesondere Kraftstofftank, mit einer im Betrieb verschlossenen Öffnung (5) sowie mit einem in verformtem Zustand durch die Öffnung (5) in den Tank (1) eingebrachten, elastisch zusammendrückbaren, großund offenporigen Schwallschutzelement, das einen zur Erzeugung von Schwallgeräuschen neigenden Bereich (3) des Tanks (1) ausfüllt und sich in diesem unter Verzicht auf Befestigungsmittel reib- undloder kraftschlüssig abstützt, **dadurch gekennzeichnet, dass** das Schwallschutzelement ein Filterschaumteil (2) ist.

2. Verfahren zum Herstellen eines Flüssigkeitstanks nach Anspruch 1, **dadurch gekennzeichnet, dass** ein der Form des Bereichs (3) des Tanks (1) angepaßtes, in zumindest einer Richtung gegenüber der entsprechenden Innenwand des Tanks (1) solches Übermaß besitzendes Filterschaumteil (2) hergestellt wird, dass später die reib- und/oder kraftschlüssige Abstützung gewährleistet ist, dass danach das Filterschaumteil durch Kompression in eine Gestalt (2') gebracht wird, die das Einführen in den Bereich (3) des Tanks (1) durch die Öffnung (5) zuläßt, dass diese Gestalt (2') durch Umwickeln (7) des Filterschaumteils (2') gewahrt und dieses in den Bereich (3) des Tanks (1) verbracht wird und dass dann die Umwicklung (7) beseitigt wird.

3. Verfahren nach Anspruch 2, **dadurch gekennzeichnet, dass** bei einem Kraftstofftank (1) für ein Fahrzeug das umwickelte Filterschaumteil (2') durch eine für eine Kraftstoffinnenpumpe (6) vorgesehene Öffnung (5) im Tank (1) in diesen eingebracht wird.

## Claims

1. Liquid tank, in particular fuel tank, with an orifice (5) which is closed during operation and with an elastically compressible large-pore and open-pore baffle element which is introduced in the deformed state through the orifice (5) into the tank (1) and which fills a region (3) of the tank (1) tending to the generation of splashing noises and is supported frictionally and/or non-positively in this region, with fastening means being dispensed with, **characterized in that** the baffle element is a filter-foam part (2).

2. Method for producing a liquid tank according to Claim 1, **characterized in that** a filter-foam part (2) adapted to the shape of the region (3) of the tank (1) and possessing in at least one direction, with respect to the corresponding inner wall of the tank (1), an oversize such that frictional and/or non-positive support is subsequently ensured, **in that**, thereafter, the filter-foam part is brought by compression into a configuration (2') which allows introduction into the region (3) of the tank (1) through the orifice (5), **in that** this configuration (2') is observed by the filter-foam part (2') being wound around (7) and the latter is brought into the region (3) of the tank (1), and **in that** the winding (7) is then eliminated.

3. Method according to Claim 2, **characterized in that**, in the case of a fuel tank (1) for a vehicle, the wound-around filter-foam part (2') is introduced into the tank (1) through an orifice (5) in the latter which is provided for an internal fuel pump (6).

## Revendications

1. Réservoir à liquide, en particulier réservoir de carburant, comprenant une ouverture (5) fermée en fonctionnement ainsi qu'un élément qui empêche les secousses dans le liquide, introduit à l'état déformé à travers l'ouverture (5) dans le réservoir (1), compressible élastiquement et à grands pores ouverts, qui remplit une zone (3) du réservoir (1) qui a tendance à produire du bruit lors que le liquide est secoué et qui est soutenu dans le réservoir en correspondance mécanique et/ou par frottement sans recourir à des éléments de fixation, **caractérisé en ce que** l'élément qui empêche les secousses dans le liquide est une pièce (2) en mousse de filtre.

2. Procédé de fabrication d'un réservoir à liquide selon la revendication 1, **caractérisé en ce que** l'on prépare une pièce (2) en mousse de filtre dont la forme est adaptée à celle de la zone (3) du réservoir (1) et qui dans au moins une direction possède par rapport à la paroi intérieure correspondante du réservoir (1) un excès dimensionnel qui permet d'assurer ultérieurement le soutien en correspondance mécanique et/ou par frottement, la pièce en mousse de filtre étant ensuite amenée par compression dans une forme (2') qui permet son insertion dans la zone (3) du réservoir (1) par l'ouverture (5), cette forme (2') étant obtenue par enroulement (7) de la pièce (2) en mousse de filtre qui est amenée dans la zone (3) du réservoir (1), l'enroulement étant ensuite supprimé.

3. Procédé selon la revendication 2, **caractérisé en ce que** dans le cas d'un réservoir de carburant (1) pour un véhicule, la pièce (2') en mousse de filtre enroulée est insérée dans le réservoir (1) par l'ouverture (5) prévue pour une pompe intérieure (6) à carburant dans celui-ci.
